# FASCICULE DE BREVET EUROPEEN

(11) **EP 1 559 159 B1**
(45) Date de publication et mention de la délivrance du brevet: **10.07.2013**
(21) Numéro de dépôt: 03807863.0
(22) Date de dépôt: 01.10.2003
(51) Int. Cl.: H01M 8/04

(54) **SOURCE D'ENERGIE ELECTRIQUE COMPORTANT UNE PILE A COMBUSTIBLE SANS REJET DE MATIERE VERS L EXTERIEUR ET PROCEDE DE CONTROLE D'UNE TELLE SOURCE D'ENERGIE.**
ELEKTRISCHE ENERGIEQUELLE MIT EMISSIONSLOSER BRENNSTOFFZELLE UND VERFAHREN ZUR STEUERUNG EINER SOLCHEN ENERGIEQUELLE
ELECTRIC POWER SOURCE COMPRISING A FUEL CELL WITHOUT DISCHARGE OF MATTER OUTSIDE AND METHOD FOR CONTROLLING SUCH A POWER SOURCE

(30) Priorité: 11.10.2002 FR 0212682
(43) Date de publication de la demande: 03.08.2005
(73) Titulaire: Commissariat à l'Énergie Atomique et aux Énergies Alternatives, 75015 Paris (FR)
(72) Inventeur: POIROT-CROUVEZIER, Jean-Philippe, F-38450 Saint-Georges-de-Commiers (FR)
(74) Mandataire: Hecké, Gérard
(86) Numéro de dépôt international: PCT/FR2003/002881
(87) Numéro de publication internationale: WO 2004/034495

(56) Documents cités:
- US-A- 3 479 224
- US-A- 4 037 024
- US-A- 5 200 278
- US-A- 5 798 186
- PATENT ABSTRACTS OF JAPAN vol. 014, no. 273 (E-0940), 13 juin 1990 (1990-06-13) & JP 02 086070 A (FUJI ELECTRIC CO LTD), 27 mars 1990 (1990-03-27)

## Description

### Domaine technique de l'invention

L'invention concerne une source d'énergie électrique comportant une pile à combustible, traversée par au moins un canal de circulation comportant une entrée et une sortie respectivement connectées à une source de fluide réactif et à un réservoir, une vanne d'entrée étant disposée entre la source de fluide réactif et l'entrée du canal de circulation.

### État de la technique

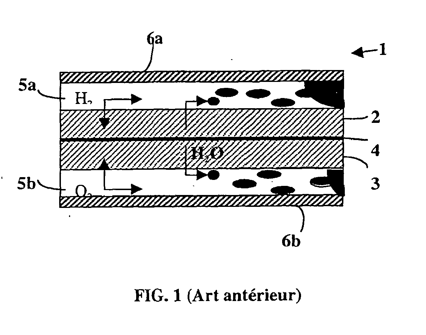

Une source d'énergie électrique comportant une pile à combustible 1 basse température de type pile à combustible à membrane échangeuse de protons, (« PEMFC ou Proton Exchange Membrane Fuel Cell ») représentée sur la figure 1, comporte une anode 2 et une cathode 3 séparées par une membrane 4 laissant passer les protons H⁺. L'anode 2 est le siège d'une réaction dont le réactif est l'hydrogène tandis qu'une réaction entre les protons H⁺ formés à l'anode 2 et de l'oxygène se produit à la cathode 3. L'anode 2 et la cathode 3 sont respectivement alimentées en hydrogène et en oxygène, via des canaux de circulation 5a et 5b connectés à des sources de réactif qui peuvent être, d'une part de l'hydrogène pur ou des hydrocarbures reformés pour la source d'hydrogène et, d'autre part de l'oxygène pur ou de l'air pour la source d'oxygène. Les canaux de circulation 5a et 5b sont respectivement délimités par la paroi externe de l'anode et de la cathode et par la paroi interne de plaques 6a et 6b.

L'eau produite au cours du fonctionnement de la pile à combustible stagne généralement dans les canaux de circulation 5a et 5b à l'intérieur de la pile à combustible 1, freinant et même arrêtant la réaction dans la pile à combustible. Pour obtenir une source d'énergie électrique avec un bon rendement, l'eau présente dans la pile à combustible doit donc être évacuée. En effet, si l'eau n'est pas évacuée, elle se condense dans la pile et s'accumule à l'opposé de l'arrivée des gaz, dans les canaux de circulation. L'accumulation d'eau risque de noyer la pile à combustible en bloquant l'accès des gaz aux électrodes.

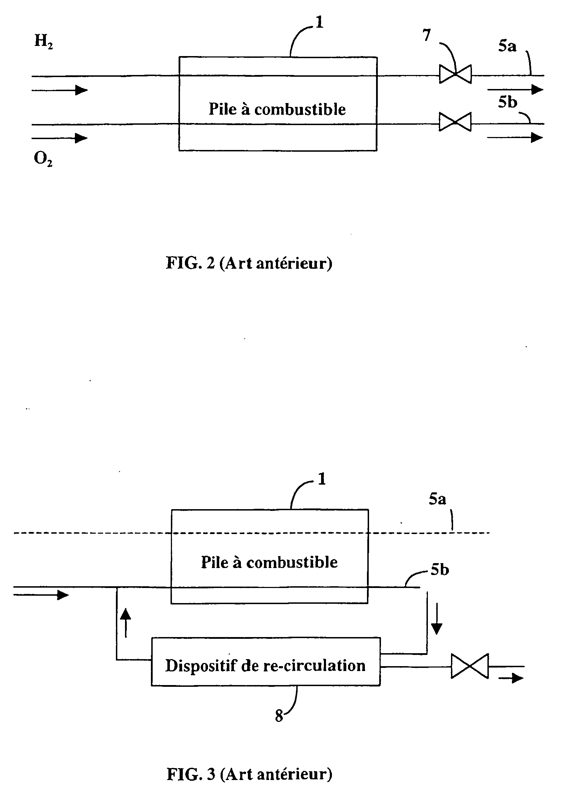

L'évacuation de l'eau produite par la pile à combustible est généralement réalisée par entraînement mécanique de l'eau, en même temps que l'évacuation de gaz réactif non consommé. Ainsi sur la figure 2, une source d'énergie comportant une pile à combustible 1, permet de réaliser une évacuation continue de l'eau produite, à la sortie des canaux de circulation 5a et 5b dont les entrées sont connectées respectivement à une source en oxygène et à une source en hydrogène. La pression des gaz dans la pile à combustible étant supérieure à la pression extérieure en aval, l'eau produite dans la pile à combustible 1 est alors entraînée mécaniquement en dehors de la pile à combustible, par le gaz réactif non consommé. Les canaux de circulation 5a et 5b comportent chacun une vanne 7, constituée dans ce cas par une vanne de détente, disposée à la sortie de la source d'énergie. Cette technique est particulièrement adaptée à une alimentation continue en air ou en combustible reformé pour laquelle il est nécessaire d'évacuer en continu les composés non réactifs comme l'azote non consommé, en plus de l'eau produite.

L'alimentation en gaz réactif étant continue, il est également possible d'évacuer l'eau en réalisant des purges périodiques à l'aide des vannes 7, constituant des vannes de purge. La pression dans la pile est supérieure à la pression extérieure en aval et les gaz réactifs non consommés entraînent, mécaniquement et de manière discontinue, l'eau à l'extérieur de la source d'énergie. Cette technique est souvent employée pour des sources de réactifs purs et la fréquence des purges est de quelques purges par minute à quelques purges par heure. Les méthodes d'évacuation continue et discontinue présentent cependant l'inconvénient de rejeter des émissions de gaz ou de fluide à l'extérieur de la pile à combustible.

Une méthode dite de re-circulation permet d'éviter les rejets. Ainsi sur la figure 3, la source d'énergie comporte un dispositif de re-circulation 8 du gaz disposé entre la sortie et l'entrée de la pile à combustible 1. Une pompe permet de réinjecter à l'entrée de la pile à combustible 1, le gaz prélevé à la sortie de la pile. L'eau produite dans la pile et évacuée par le canal de circulation 5b en même temps que le gaz réactif non consommé, est ensuite séparée du gaz réactif dans le dispositif de re-circulation qui peut être, par exemple, un condenseur. L'eau est alors évacuée vers l'extérieur ou stockée. Par exemple, le document US5798186A décrit une source énergétique comportant une cellule électrochimique Une source d'hydrogène et une source d'air sont connectées à l'entrée de la cellule électrochimique tandis qu'un réservoir est connecté à la sortie de la cellule de manière à collecter l'eau formée et l'hydrogène n'ayant pas réagi dans la cellule. Un régulateur de pression est disposé entre la source d'hydrogène et l'entrée de la cellule et l'hydrogène n'ayant pas réagi est redirigé à l'entrée de la cellule, en aval du régulateur de pression, grâce à une canalisation extérieure et une pompe. Cette méthode dite de re-circulation évite des rejets, mais elle est complexe à réaliser et nécessite une source d'énergie volumineuse et une pompe qui nuit à la robustesse de la source d'énergie.

Il est également connu de combiner les méthodes de circulation continue et discontinue et de re-circulation. Par exemple, le document « Fuel cell systems » de Leo J. M. Blomen et de Michael N. Mugerwa (Plenum Press - New York and London, 1993) décrit, pages 518 et 519, une source d'énergie comportant une pile à combustible et un système de circulation discontinue pour le canal de circulation de l'hydrogène et un système de re-circulation pour le canal réservé à l'oxygène. Ces sources d'énergie sont cependant encombrantes et nécessitent des équipements supplémentaires, peu pratiques en milieu confiné.

### Objet de l'invention

L'invention a pour but une source d'énergie électrique comportant une pile à combustible, compacte, robuste et capable d'évacuer l'eau de la pile à combustible, sans rejeter de matière à l'extérieur de la source d'énergie électrique.

Selon l'invention, ce but est atteint par une source d'énergie électrique selon les revendications annexées.

Selon un développement de l'invention, la source d'énergie comporte deux canaux de circulation respectivement connectés d'une part à des premier et second réservoirs et d'autre part à une source d'hydrogène et à une source d'oxygène.

Selon une autre caractéristique de l'invention, le volume du réservoir est très supérieur au volume de fluide réactif contenu dans la pile à combustible.

L'invention a également pour objet un procédé de contrôle d'une source d'énergie telle que ci-dessus, facile à réaliser.

Selon l'invention, le procédé d'opération et de contrôle comporte :
- le réservoir étant rempli de fluide réactif, la fermeture de la vanne d'entrée du canal de circulation pendant une première période de temps prédéterminée,
- l'ouverture de la vanne d'entrée pendant une seconde période de temps prédéterminée, de manière à évacuer dans le réservoir, l'eau accumulée dans la pile à combustible pendant la première période de temps et à remplir de nouveau le réservoir de fluide réactif, la seconde période de temps étant très inférieure à la première période de temps.

Selon un développement de l'invention, la seconde période de temps a une durée de l'ordre de quelques fractions de secondes.

### Description sommaire des dessins

D'autres avantages et caractéristiques ressortiront plus clairement de la description qui va suivre de modes particuliers de réalisation de l'invention donnés à titre d'exemples non limitatifs et représentés aux dessins annexés, dans lesquels :
La figure 1 représente schématiquement une pile à combustible de type PEMFC d'une source d'énergie selon l'art antérieur.
Les figures 2 et 3 sont des représentations schématiques de sources d'énergie électrique selon l'art antérieur.
Les figures 4 et 5 représentent schématiquement une source d'énergie selon l'invention, la vanne d'entrée étant respectivement en position fermée et en position ouverte.

### Description de modes particuliers de réalisation.

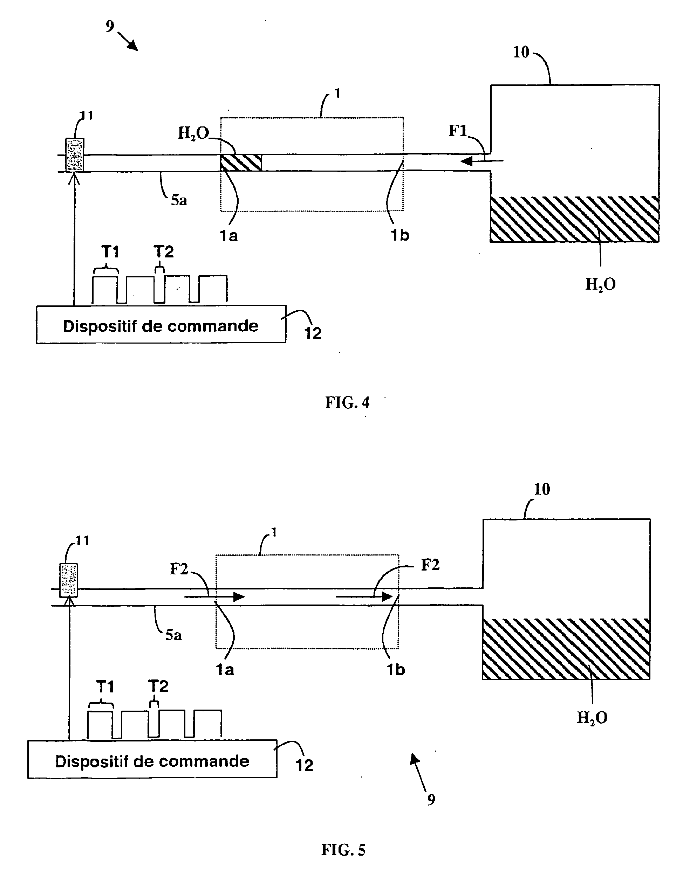

La source d'énergie électrique, de préférence utilisée en milieu confiné, comporte une pile à combustible 1 et au moins un canal de circulation 5a traversant la pile à combustible. Sur la figure 4, la pile à combustible 1 de type PEMFC est délimitée par des pointillés et elle comporte au moins une entrée 1 a et au moins une sortie 1 b reliées entre elles par le canal de circulation 5a. Le canal de circulation 5a comporte une entrée, connectée à une source de fluide réactif (non représentée) et disposée en amont de l'entrée 1 a de la pile à combustible, et une sortie disposée en aval de la sortie 1 b de la pile à combustible, de manière à alimenter la pile à combustible en fluide réactif et à évacuer l'eau produite dans la pile à combustible. La source d'énergie 9 comporte également un réservoir 10 disposé en sortie du canal de circulation 5a et une vanne d'entrée 11 disposée entre la source de fluide réactif et l'entrée du canal de circulation 5a. L'ouverture et la fermeture de la vanne d'entrée 11 sont contrôlées par un dispositif de commande 12.

Le réservoir 10 est destiné à contenir le fluide réactif alimentant la pile à combustible et l'eau produite dans la pile à combustible. Son volume est supérieur au volume de fluide réactif contenu dans la pile à combustible, de manière à pouvoir contenir la quantité d'eau produite pendant un temps d'utilisation de la source d'énergie suffisamment long.

Le fonctionnement de la source d'énergie électrique 9 est régi par un procédé de contrôle de la source d'énergie électrique comportant deux étapes se répétant alternativement. Le réservoir contient, à l'origine, un fluide réactif, destiné à alimenter la pile à combustible en fluide réactif. Le réservoir est rempli en fluide réactif en ouvrant la vanne d'entrée 11 grâce au dispositif de commande 12. Il contient, de préférence, de l'hydrogène pur s'il est disposé en sortie du canal de circulation correspondant à une source d'hydrogène, ou de l'oxygène pur s'il est disposé en sortie du canal correspondant à une source d'oxygène. La source d'énergie peut également comporter deux canaux de circulation respectivement connectés d'une part à des premier et second réservoirs et d'autre part à une source d'hydrogène et à une source d'oxygène.

Une fois le réservoir 10 rempli, la vanne d'entrée 11 du canal de circulation 5a est fermée (figure 4) pendant une première période de temps T1 prédéterminée assez longue. L'alimentation en un fluide réactif de la pile à combustible 1 se fait alors par l'intermédiaire du réservoir 10. Sur la figure 4, la circulation du fluide réactif lorsque la vanne d'entrée est fermée, est représentée par la flèche F1 qui est dirigée du réservoir 10 vers la sortie 1 b de la pile à combustible 1. Ainsi, l'alimentation de la pile à combustible en fluide réactif a lieu par la sortie 1 b de la pile à combustible. La pile à combustible consomme le fluide réactif et produit de l'eau, majoritairement sous forme liquide. Si le fluide réactif est un gaz, la quantité de gaz à l'intérieur de la pile diminue progressivement et provoque une dépression à l'intérieur de la pile à combustible 1. L'eau produite s'accumule dans le canal de circulation 5a, à l'opposé de l'arrivée en fluide réactif, c'est-à-dire à l'opposé du réservoir 10, à l'entrée 1a de la pile à combustible, pendant toute la première période de temps T1.

La vanne d'entrée 11 est ensuite ouverte pendant une seconde période de temps prédéterminée T2 (figure 5), de manière à rééquilibrer la pression dans le circuit de circulation 5a. L'ouverture de la vanne d'entrée, actionnée par le dispositif de commande 12 permet d'évacuer périodiquement vers le réservoir 10, l'eau accumulée dans la pile à combustible pendant la première période de temps T1. Le courant de fluide réactif arrivant à l'entrée du canal de circulation 5a entraîne l'eau accumulée à l'entrée 1a de la pile à combustible, vers le réservoir 10 et permet de remplir de nouveau le réservoir 10 en fluide réactif. Sur la figure 5, les flèches F2 représentent le mouvement de circulation du fluide réactif allant de l'entrée du canal de circulation vers le réservoir 10, en traversant la pile à combustible 1 de son entrée 1 a vers sa sortie 1 b. La seconde période de temps T2 est très inférieure à la première période de temps T1. Elle a, de préférence, une durée de l'ordre de quelques fractions de secondes. Ainsi, le fait de disposer un réservoir 10 à la sortie du canal de circulation 5a et d'actionner périodiquement une vanne d'entrée 11 disposée à l'entrée du canal de circulation permet de faire circuler le fluide réactif dans le canal de circulation 5a alternativement dans un sens et dans l'autre et donc de réduire le volume de la source d'énergie électrique en supprimant des canaux extérieurs de re-circulation.

Le réservoir est, de préférence, disposé à un niveau inférieur à la pile à combustible, de manière à piéger l'eau dans le réservoir, par gravité et donc empêcher le retour de l'eau contenue dans le réservoir vers la pile à combustible.

Le réservoir peut également comporter des moyens de piégeage physique ou chimique de l'eau, pour empêcher le passage de l'eau contenue dans le réservoir vers la pile à combustible. Le réservoir peut, par exemple, comporter un matériau poreux ou un sel, occupant le volume du réservoir et retenant l'eau par capillarité ou par absorption. Les matériaux poreux ou les sels sont particulièrement adaptés à des applications spatiales où l'absence de gravité rend la séparation gaz-liquide plus complexe. Le matériau poreux peut être de tout type, par exemple, de type mousse métallique, céramique, polymère ou feutre métallique.

Si le fluide réactif contenu dans le réservoir est un gaz, le réservoir peut être chauffé, de manière à maintenir son contenu à une température proche de la température de fonctionnement de la pile à combustible. L'humidification du gaz est alors assurée pendant la première période de temps, lorsque la vanne d'entrée est fermée, ce qui favorise un niveau de performance optimal pour la pile à combustible.

Le volume du réservoir est supérieur au volume de fluide réactif contenu dans la pile à combustible, de manière à pouvoir contenir la quantité d'eau produite pendant un temps d'utilisation de la source d'énergie suffisamment long. A titre d'exemple, le réservoir peut avoir un volume de 10 litres pour une pile de 10kW, tandis que le volume de fluide réactif contenu dans la pile à combustible est de 0,1l/kW et le volume d'eau produite est de 0,5l/kWh. La capacité de stockage de l'eau correspond alors à au moins 10kWh.

La source d'énergie présente l'avantage de ne pas rejeter de gaz à l'extérieur de la source d'énergie électrique, et permet de stocker pendant une période de temps assez longue, l'eau produite par la pile à combustible.

L'invention n'est pas limitée aux modes de réalisation particuliers décrits ci-dessus. Ainsi le réservoir peut être disposé à l'intérieur de la pile à combustible, par exemple entre les plaques 6a et 6b.

De même, l'invention s'appliquant, de préférence, aux piles à combustible basse température et plus particulièrement aux piles de type PEMFC, peut également s'appliquer à d'autres types de piles à combustible utilisant des réactifs purs comme combustible ou comburant. Ainsi, elle peut s'appliquer à des piles de type AFC (« Alkaline Fuel Cell »), PAFC (« Phosphore Acid Fuel Cell) ou SOFC (Solid Oxide Fuel Cell).

## Revendications

1. Source d'énergie électrique comportant une pile à combustible (1) traversée par au moins un canal de circulation (5a) comportant une entrée connectée à une source de fluide réactif et une sortie connectées à un réservoir (10), une vanne d'entrée étant disposée entre la source de fluide réactif et l'entrée du canal de circulation (5a), ladite pile à combustible (1) comportant une entrée (1a) et une sortie (1 b) reliées par le canal de circulation (5a), source d'énergie **caractérisée en ce qu'**elle comporte un dispositif de commande (12) contrôlant l'ouverture et la fermeture de la vanne d'entrée (11) grâce auquel la vanne d'entrée (11) est fermée pendant une première période de temps (T1) prédéterminée et ouverte pendant une seconde période de temps (T2) prédéterminée très inférieure à la première période de temps (T1), de manière à alimenter la pile à combustible (1) en fluide réactif, pendant la première période de temps (T1), uniquement à partir du réservoir (10) au travers du canal de circulation (5a) par ladite sortie de la pile (1 b) et, pendant la seconde période de temps (T2), à remplir le réservoir (10) en fluide réactif uniquement à partir de la source de fluide réactif à travers le canal de circulation (5a) et à évacuer ainsi dans le réservoir (10) l'eau accumulée dans la pile à combustible (1).

2. Source d'énergie selon la revendication 1, **caractérisée en ce qu'**elle comporte deux canaux de circulation (5a, 5b) respectivement connectés d'une part à des premier et second réservoirs (10) et d'autre part à une source d'hydrogène et à une source d'oxygène.

3. Source d'énergie selon l'une des revendications 1 et 2, **caractérisée en ce que** le réservoir (10) est disposé à un niveau inférieur à la pile à combustible (1), de manière à piéger l'eau dans le réservoir (10).

4. Source d'énergie selon l'une des revendications 1 et 2, **caractérisée en ce que** le réservoir (10) comporte des moyens de piégeage physique ou chimique de l'eau.

5. Source d'énergie selon la revendication 4, **caractérisée en ce que** les moyens de piégeage comportent un matériau poreux.

6. Source d'énergie selon la revendication 4, **caractérisée en ce que** les moyens de piégeage comportent un sel.

7. Source d'énergie selon l'une quelconque des revendications 1 à 6, **caractérisée en ce que** le volume du réservoir (10) est très supérieur au volume de fluide réactif contenu dans la pile à combustible (1).

8. Procédé d'opération et de contrôle d'une source d'énergie selon l'une quelconque des revendications 1 à 7, **caractérisé en ce qu'**il comporte :
- le réservoir (10) étant rempli de fluide réactif, la fermeture de la vanne d'entrée (11) du canal de circulation (5a) pendant une première période de temps (T1) prédéterminée,
- l'ouverture de la vanne d'entrée (11) pendant une seconde période de temps (T2) prédéterminée, de manière à évacuer dans le réservoir (10), l'eau accumulée dans la pile à combustible (1) pendant la première période de temps (T1) et à remplir de nouveau le réservoir (10) de fluide réactif, la seconde période de temps (T2) étant très inférieure à la première période de temps (T1).

9. Procédé selon la revendication 8, **caractérisé en ce que** la seconde période de temps (T2) a une durée de l'ordre de quelques fractions de secondes.

10. Procédé selon l'une des revendications 8 et 9, **caractérisé en ce que** le réservoir (10) est chauffé de manière à maintenir son contenu à une température proche de la température de fonctionnement de la pile à combustible.

## Patentansprüche

1. Elektrische Energiequelle mit einer Brennstoffzelle (1), durch die mindestens ein Zirkulationskanal (5a) hindurchverläuft, der einen Eintritt aufweist, der mit einer Quelle mit reaktivem Fluid verbunden ist, und einen Austritt aufweist, der mit einem Tank (10) verbunden ist, wobei ein Einlassventil zwischen der Quelle mit reaktivem Fluid und dem Eintritt des Zirkulationskanals (5a) angeordnet ist, wobei die Brennstoffzelle (1) einen Eintritt (1a) und einen Austritt (1b) aufweist, die durch den Zirkulationskanal (5a) verbunden sind, wobei die Energiequelle **dadurch gekennzeichnet ist, dass** sie ein Steuergerät (12) aufweist, das das Öffnen und Schließen des Einlassventils (11) steuert, so dass das Einlassventil (11) während eines ersten vorgegebenen Zeitraumes (T1) geschlossen wird und während eines zweiten vorgegebenen Zeitraumes (T2) geöffnet wird, der weit kleiner als der erste Zeitraum (T1) ist, um der Brennstoffzelle (1) während des ersten Zeitraumes (T1) ausschließlich aus dem Tank (10) durch den Zirkulationskanal (5a) und über den Austritt der Zelle (1b) ein reaktives Fluid zuzuführen, und während des zweiten Zeitraumes (T2) den Tank (10) ausschließlich aus der Quelle mit dem reaktiven Fluid durch den Zirkulationskanal (5a) mit reaktivem Fluid zu füllen und somit das in der Brennstoffzelle (1) angesammelte Wasser in den Tank (10) abzuführen.

2. Energiequelle nach Anspruch 1, **dadurch gekennzeichnet, dass** sie zwei Zirkulationskanäle (5a, 5b) aufweist, die jeweils einerseits mit einem ersten und zweiten Tank (10) und andererseits mit einer Wasserstoffquelle und einer Sauerstoffquelle verbunden sind.

3. Energiequelle nach einem der Ansprüche 1 und 2, **dadurch gekennzeichnet, dass** der Tank (10) auf einer niedrigeren Ebene als die Brennstoffzelle (1) angeordnet ist, um das Wasser in dem Tank (10) aufzufangen.

4. Energiequelle nach einem der Ansprüche 1 und 2, **dadurch gekennzeichnet, dass** der Tank (10) physikalische oder chemische Auffangmittel für das Wasser aufweist.

5. Energiequelle nach Anspruch 4, **dadurch gekennzeichnet, dass** die Auffangmittel ein poröses Material aufweisen.

6. Energiequelle nach Anspruch 4, **dadurch gekennzeichnet, dass** die Auffangmittel ein Salz aufweisen.

7. Energiequelle nach einem der Ansprüche 1 bis 6, **dadurch gekennzeichnet, dass** das Volumen des Tanks (10) weitaus größer ist als das Volumen des in der Brennstoffzelle (1) enthaltenen reaktiven Fluids.

8. Verfahren für den Betrieb und die Steuerung einer Energiequelle nach einem der Ansprüche 1 bis 7, **dadurch gekennzeichnet, dass** es folgendes aufweist:
- der Tank (10) ist mit reaktivem Fluid gefüllt und das Schließen des Einlassventils (11) des Zirkulationskanals (5a) erfolgt während eines vorgegebenen ersten Zeitraums (T1),
- das Öffnen des Einlassventils (11) erfolgt während eines zweiten vorgegebenen Zeitraums (T2), so dass das in der Brennstoffzelle (1) während des ersten Zeitraums (T1) angesammelte Wasser in den Tank (10) abgeführt und der Tank (10) erneut mit reaktivem Fluid gefüllt werden kann, wobei der zweite Zeitraum (T2) weit kleiner als der erste Zeitraum (T1) ist.

9. Verfahren nach Anspruch 8, **dadurch gekennzeichnet, dass** der zweite Zeitraum (T2) eine Dauer in der Größenordnung von einigen Bruchteilen von Sekunden aufweist.

10. Verfahren nach einem der Ansprüche 8 und 9, **dadurch gekennzeichnet, dass** der Tank (10) beheizt wird, so dass sein Inhalt auf einer Temperatur gehalten wird, die nahe an der Betriebstemperatur der Brennstoffzelle liegt.

## Claims

1. Electric power source comprising a fuel cell (1), at least one flow channel (5a) running through the fuel cell, the at least one flow channel comprising an inlet connected to a reactive fluid source and an outlet connected to a tank (10), an inlet valve being arranged between the reactive fluid source and the inlet of the flow channel (5a), said fuel cell (1) comprising an inlet (1a) and an outlet (1b) linked by the flow channel (5a), power source **characterized in that** it comprises a control device (12) controlling opening and closing of the inlet valve (11) by which the inlet valve (11) is closed during a predetermined first time period (T1) and opened during a predetermined second time period (T2) much shorter than the first time period (T1), for feeding the fuel cell (1) with reactive fluid, during the first time period (T1), only from the tank (10) through the flow channel (5a) by said outlet of the fuel cell (1b) and, during the second time period (T2), for filling the tank (10) with reactive fluid only by the reactive fluid source through the flow channel (5a) and for evacuating to the tank (10) the water accumulated in the fuel cell.

2. Power source according to claim 1, **characterized in that** it comprises two flow channels (5a, 5b) respectively connected on the one hand to first and second tanks (10) and on the other hand to a hydrogen source and to an oxygen source.

3. Power source according to one of the claims 1 and 2, **characterized in that** the tank (10) is arranged at a lower level than the fuel cell (1) so as to trap the water in the tank (10).

4. Power source according to one of the claims 1 and 2, **characterized in that** the tank (10) comprises means for physical or chemical trapping of the water.

5. Power source according to claim 4, **characterized in that** the trapping means comprise a porous material.

6. Power source according to claim 4, **characterized in that** the trapping means comprise a salt.

7. Power source according to any one of the claims 1 to 6, **characterized in that** the volume of the tank (10) is much greater than the volume of reactive fluid contained in the fuel cell (1).

8. Operating and control process of a power source according to any one of the claims 1 to 7, **characterized in that** it comprises:
- the tank (10) being filled with reactive fluid, closing of the inlet valve (11) of the flow channel (5a) for a predetermined first time period (T1),
- opening of the inlet valve (11) for a predetermined second time period (T2), so as to evacuate the water accumulated in the fuel cell (1) during the first time period (T1) to the tank (10) and to refill the tank (10) with reactive fluid, the second time period (T2) being much shorter than the first time period (T1).

9. Process according to claim 8, **characterized in that** the second time period (T2) has a duration of about a few fractions of seconds.

10. Process according to one of the claims 8 and 9, **characterized in that** the tank (10) is heated so as to keep its content at a temperature close to the operating temperature of the fuel cell.
